# EUROPÄISCHE PATENTANMELDUNG

(11) **EP 2 106 873 A1**
(43) Veröffentlichungstag der Anmeldung: **07.10.2009**
(21) Anmeldenummer: 09154983.2
(22) Anmeldetag: 12.03.2009
(51) Int. Cl.: B23K 20/12, F01D 5/08, F01D 5/18, B23P 6/00, F01D 5/00

(54) **Verfahren zur Herstellung von integral beschaufelter Rotoren durch Verwendung das kreisförmigen Reibschweissen**

(30) Priorität: 04.04.2008 DE 102008017495
(71) Anmelder: Rolls-Royce Deutschland Ltd & Co KG, 15827 Blankenfelde-Mahlow (DE)
(72) Erfinder: Schreiber, Karl, 15838 Am Mellensee (DE)

(57) **Zusammenfassung**

Der Herstellung oder Reparatur von Blisks, insbesondere Hochdruckturbinenblisks für Gasturbinentriebwerke erfolgt durch eine mittels kreisförmigem Reibschweißen hergestellte Fügeverbindung zwischen der Rotoroscheibe und den vorgefertigten Schaufeln. Aufgrund der dabei erforderlichen geringen Kräfte und Beschleunigung bei der Wärmeerzeugung durch Reibung und der gewuchteten Reibschweißkreisbewegung bei konstantem Anstellwinkel der scheibe zum Rotor ist selbst bei den kleinen und komplizierten Fügeflächen von Turbinenschaufeln sowie unterschiedlichen Werkstoffen eine exakte und gleichmäßige Anordnung und Ausrichtung der Schaufeln am Umfang der Rotorscheibe möglich.

## Beschreibung

Die Erfindung betrifft ein Verfahren zur Herstellung oder zur Reparatur von integral beschaufelten Rotoren, insbesondere Hochdruckturbinenblisks für Gasturbinentriebwerke, bei dem am Umfang einer Rotorscheibe eine Vielzahl von vorgefertigten Schaufeln in einem Fügeprozess angeformt wird.

Im Triebwerksbau eingesetzte Rotoren mit integraler Beschaufelung, die auch als Blisk bezeichnet werden, zeichnen sich gegenüber herkömmlichen Rotoren mit an einer Rotorscheibe lösbar befestigten Schaufeln durch verminderte Montagekosten, eine erhebliche Gewichtsersparnis, eine erhöhte mechanische Belastbarkeit sowie eine optimale Strömungsführung und einen hohen Wirkungsgrad aus. Die Herstellung von in Blisk-Bauweise ausgebildeten Rotoren erfolgt bekanntermaßen durch Fräsen aus dem vollen Material. Darüber hinaus wurde auch schon das Verbinden vorgefertigter Schaufeln mit der Rotorscheibe mittels linearem Reibschweißen vorgeschlagen. Das Fräsen der Schaufeln aus dem Vollmäterial eines Soheibenrohlings ist zwar in jeder Größe und Gestaltung möglich, erfordert aber einen hohen Arbeits- und Materialaufwand.

Die beispielsweise in der US 6219916 oder der EP 1535692 beschriebene Herstellung von Blisks durch lineares Reibschweißen ist an ein bestimmtes Bauteildesign und groß dimensionierte Schaufeln gebunden und zudem mit einer aufwändigen Vorrichtungskonzeption verbunden. Die bei der Bliskherstellung durch Linearreibschweißen erforderlich Übertragung großer Kräfte sowie die hohe Beschleunigung bei der oszillierenden Bewegung und die genaue Ausrichtung der zu verbindenden Bauteile bereitet jedoch insbesondere bei kleinen, mit Kühlluftzuführungskanälen versehenen Turbinenschaufeln mit entsprechend kleinen, kompliziert geformten Verbindungsflächen, zumal für die Rotorscheibe und die Schaufeln aufgrund der unterschiedlichen mechanischen und thermischen Belastung auch noch verschiedene Werkstoffe eingesetzt werden sollen, erhebliche Schwierigkeiten. Aufgrund der großen Vorteile von Blisks besteht aber seit langer Zeit ein dringendes, bisher nicht befriedigtes Bedürfnis, auch die vorzugsweise aus unterschiedlichen Scheiben- und Schaufelwerkstoffen auszubildenden Rotoren im Bereich der Hochdruckturbine mit einer integralen Beschaufelung auszuführen.

Bei dem in der DE 10 2006 033 298 A1 beschriebenen Verfahren werden an einer mit angeformten Schaufelfüßen ausgebildeten Rotorscheibe Schaufelansatzstücke mit einem bestimmten Fertigbearbeitungsaufmaß durch Reibruhrschweißen befestigt und anschließend erfolgt eine spanende oder elektrochemische Fertigbearbeitung der Schaufeln. Das in der DE 10 2004 032 461 A1 beschriebene Verfahren zur Herstellung einer Schweißverbindung zwischen der Rotorscheibe und den vorgefertigten Schaufeln setzt eine am Schaufelblatt angeformte Fixierleiste zur Ausbildung eines Schweißspaltes und zur Fixierung des Schaufelblattes sowie eine anschließende spanende Bearbeitung voraus. Die Anwendung dieser Schweißverfahren für die Bliskherstellung ist mit einem erheblichen Arbeitsaufwand verbunden und ist für die Herstellung beschaufelter Rotoren im Bereich der Turbine bisher unterblieben. Ein Problem bei der Herstellung von Blisk durch Linearreibschweißen ist außerdem die infolge der Wulstbildung beim Schweißer erforderliche Nacharbeit und die aufgrund der Unwucht der Linearbewegung nicht exakte Schaufelausrichtung und die daher anschließend erforderliche aufwändige Wuchtung.

Der Erfindung liegt die Aufgabe zugrunde, ein Verfahren zur Herstellung integral beschaufelter Triebwerksrotoren anzugeben, das auch bei kleinen Schaufeln und entsprechend kleinen Verbindungsflächen und für die Rotorscheibe und die Schaufeln unterschiedlichen Werkstoffen eine feste Verbindung zwischen den Schaufeln und der Scheibe und exakte Anordnung und Ausrichtung der Schaufeln ermöglicht.

Erfindungsgemäß wird die Aufgabe mit einem Verfahren gemäß den des Patentanspruchs 1 gelöst. Vorteilhafte Weiterbildungen der Erfindung ergeben sich aus den Unteransprüchen.

Der Kern der Erfindung besteht in einer aufeinander kreisförmigen Reibschweißbewegung der Fügeflächen zur einstückigen Verbindung der Schaufeln mit einer RotorScheibe. Die Kreisbewegung kann entweder von der Schaufel und der Scheibe ausgeführt werden, wobei sich die beiden Fügeflächen kreisförmig um 180° versetzt aufeinander bewegen, oder die Kreisbewegung kann vorzugsweise nur von der Schaufel ausgeführt werden, wodurch der apparative Aufwand noch erheblich verringert werden kann. Überraschenderweise wurde gefunden, dass es mit diesem Reibschweißverfahren gelingt, integral beschaufelte Hochdruckturbinenrotoren herzustellen, die komplizierte Schaufelquerschnitte aufweisen und deren Scheibe und Schaufeln mechanisch und thermisch sehr unterschiedlich belastet werden und aus dementsprechend unterschiedlichen Werkstoffen bestehen. Bei der Herstellung der Schweißverbindung durch eine kreisende Bewegung der beiden Bauteile wird der Anstellwinkel der Schaufel relativ zur Scheibe während des gesamten Schweißvorgangs nicht verändert und kann somit für jede Schaufel identisch eingestellt werden. Aufgrund der beherrschbaren Beschleunigung und Kraftwirkung und der Vermeidung von Unwuchten bei der kreisförmigen Bewegung während des Erwärmungs- und Schweißverbindungsprozesses ist auf kleinem Raum eine genaue Anordnung der Schaufeln und deren gleichmäßige Ausrichtung an der Rotorscheibe möglich, so dass Unwuchten des Rotors minimiert werden.

Nachfolgend wird die Erfindung in einem Ausführungsbeispiel zur Herstellung einer Hochdruckturbinenblisk näher erläutert.

Die einer Temperatur von ca. 650 °C ausgesetzte Rotorscheibe einer Hochdruckturbinenblisk besteht aus Udimet 720, das heißt einer Nickelbasis-Legierung mit extrem hoher Festigkeit, während die mit der Rotorscheibe zu verbindenden, einer Temperatur von ca. 1200 °C ausgesetzten und mit Kühlluftbohrungen versehenen Turbinenschaufeln mit kleiner Querschnittsfläche aus der einkristallinen Legierung CMSX4, das heißt einer hochtemperaturbeständigen Nickelbasislegierung, gefertigt sind. Selbstverständlich ist entsprechend der unterschiedlichen mechanischen und thermischen Belastung auch der Einsatz anderer Werkstoffkombinationen denkbar. Beispielsweise können die Schaufeln auch aus gerichtet erstarrten oder polykristalliten Werkstoffen bestehen.

Die Verbindung rotorscheibe und Schaufel erfolgt durch Reibsehweißen auf der Basis einer kreisförmigen Bewegung der Rotorscheibe und der Schaufel, das heißt der beiderseitigen Fügeflächen aufeinander. Dabei werden die Rotorscheibe und die mit dieser zu verbindende Schaufel jeweils in eine Schwingvorrichtung eingespannt und mit ihren einander gegenüberliegenden, sich berührenden Fügeflächen mit einem Phasenversatz von 180° jeweils in gleicher Richtung in kleinste kreisförmige Bewegungen versetzt. Das konzentrisch angeordnete Maschinensystem ist mit Gewichten gewuchtet, so dass nur geringe äußere Kräfte auftreten. Durch die um 180° versetzte, gleichsinnige Relativbewegung der beiden Bauteile bzw. Fügeflächen und die dabei erzeugte flächige Reibung erwärmt sich das Material der Schaufel und der Scheibe in der Fügeebene gleichmäßig und schnell. Sobald die Fügetemperatur erreicht ist und sich die beiden Werkstoffe in einem plastischen Zustand befinden, wird die kreisende Bewegung der beiden Teile durch Verschieben in einen gemeinsamen Drehmittelpunkt unterbrochen und auf beide Teile ein in Richtung der Fügefläche wirkender Druck ausgeübt, so dass die jeweilige Schaufel an der Rotorscheibe verschweißt wird. Während des gesamten Erwärmungs- und Fügeprozesses bleibt der Anstellwinkel der Schaufel zur Rotorscheibe unverändert. Aufgrund der durch die kreisförmige Bewegung der beiden Fügeflächen erreichten schnellen und gleichmäßigen Erwärmung im Fugebereich ist auch bei der Verbindung sehr unterschiedlicher Werkstoffe nur ein geringer Kraftaufwand erforderlich, so dass auch Schaufeln mit sehr kleinen und kompliziert gestalteten Querschnittsflächen fest mit der Rotorscheibe verbunden werden können und eine genaue Ausrichtung der Schaufeln in Bezug auf die Rotorscheibe erreicht werden kann und somit im Wesentlichen keine Unwuchten bei einer derart hergestellten Blisk zu verzeichnen sind.

Das zuvor beschriebene Verfahren kann auch zur Reparatur der Hochdruckturbinenblisk eingesetzt werden, wobei die Verbindung des neuen Schaufelblattes mit der Rotorscheibe an einem an dieser nach dem Abtrennen der beschädigten Turbinenschaufel verbliebenen Schaufelstumpf erfolgt. Insbesondere ist es auch möglich, dass die kreisförmige Bewegung nur von der Schaufel ausgeführt wird.

## Patentansprüche

1. Verfahren zur Herstellung oder zur Reparatur von integral beschaufelten Rotoren, insbesondere Hochdruckturbinenblisks, für Gasturbinentriebwerke, bei dem am Umfang einer Rotorscheibe eine Vielzahl von vorgefertigten Schaufeln in einem Fügeprozess angeformt wird, **dadurch gekennzeichnet, dass** die stirnseitigen Fügeflächen der Schaufeln durch ein kreisförmiges Reibschweißen mit einer am umfang der Rotorscheibe oder an mit dieser verbundenen Schaufelstümpfen gebildeten Fügefläche verbunden werden, indem bei konstanter der Schaufel zur Rotorscheibe der beiderseitige Fügebereich durch eine gewuchtete kreisförmige Bewegung mindestens einer der beiden Fügeflächen erwärmt und die Fügeflächen in plastischem Zustand des Fügebereichs und in zueinander zentrischer Position aufeinander gedrückt und dabei miteinander verschweißt werden.

2. Verfahren nach Anspruch 1, **gekennzeichnet durch** eine kreisförmige Bewegung der Fügefläche der Schaufel auf einer ruhenden Fügefläche der Rotorscheibe.

3. Verfahren nach Anspruch 1, **gekennzeichnet durch** eine gleichsinnige, versetzte kreisförmige Reibbewegung der Fügeflächen der Schaufel und der RotorScheibe aufeinander.

4. Verfahren nach Anspruch 1, **dadurch gekennzeichnet, dass** jeweils unterschiedliche Scheiben- und Schaufelwerkstoffe mit unterschiedlicher mechanischer und thermischer Belastbarkeit oder gleiche Werkstoffe mit unterschiedlicher Mikrostruktur miteinander verschweißt werden.

5. Verfahren nach Anspruch 1, **dadurch gekennzeichnet, dass** Rotorscheiben und Rotorschaufeln miteinander verschweißt werden, die ineinander übergehende Kühlluftkanäle aufweisen.
